# EUROPEAN PATENT APPLICATION

(11) **EP 2 461 285 A1**
(43) Date of publication of application: **06.06.2012**
(21) Application number: 10809556.3
(22) Date of filing: 17.08.2010
(51) Int. Cl.: G06Q 30/00

(54) **METHOD, APPARATUS AND SYSTEM FOR ADVERTISEMENT DELIVERY**

(30) Priority: 17.08.2009 CN 200910166304
(71) Applicant: Huawei Technologies Co., Ltd., Guangdong 518129 (CN)
(72) Inventor: LI, Kepeng, Shenzhen Guangdong 518129 (CN); SHAO, Gang, Shenzhen Guangdong 518129 (CN); TAN, Yinyan, Shenzhen Guangdong 518129 (CN)
(74) Representative: Thun, Clemens
(86) International application number: PCT/CN2010/076057
(87) International publication number: WO 2011/020423

(57) **Abstract**

Embodiments of the present invention relate to a method, an apparatus, and a system for placing an advertisement. The method includes: after receiving an advertisement placement request, selecting, by an advertisement client or an application server according to the advertisement placement request, advertisement information to be placed; judging validity of the advertisement information according to advertisement metadata that is generated by an advertisement server and associated with the selected advertisement information; and judging, according to the validity of the advertisement information, whether to place the advertisement information. In the embodiments of the present invention, capping of the total exposure frequency on a terminal side and a network side can be implemented in an accurate and controllable manner, so that an advertisement platform can avoid an invalid advertisement placement, a cost of an advertiser is reduced, and a return on an investment in the advertisement is improved.

## Description

### FIELD OF THE INVENTION

The present invention relates to the field of communications technologies, and in particular, to a method, an apparatus, and a system for placing an advertisement.

### BACKGROUND OF THE INVENTION

A mobile advertisement service is a technology for placing advertisement information through a mobile media. An existing system for supporting the mobile advertisement service is a mobile advertisement system (Mobile Advertising Enabler, MobAd for short) based on the Open Mobile Alliance (Open Mobile Alliance, OMA for short). Based on this system, an existing advertisement placement method is to obtain advertisement information to be placed from an advertisement server (Advertisement Server, Ad Server for short) of the mobile advertisement system and buffer the advertisement information on an application server (Service Provider Application, SP App for short) and an advertisement client (Advertisement Engine, Ad Engine for short) in advance, where the application server or the advertisement client places an advertisement to an audience user terminal. The advertisement server and the application server are located on a network side, and the advertisement client and an application client are located on a terminal side.

With respect to the existing advertisement information locally buffered on the advertisement client or the application server, the advertisement may be invalid because a placement task of the advertisement is fulfilled, or the advertisement cannot be placed at present because frequency capping of exposure (that is, presentation to a user) to an audience user is reached, or advertisement metadata is modified because of reasons such as that an advertiser modifies an advertisement task or an advertisement placement policy. Advertisement data in a buffer however, is not synchronized accordingly, which leads to an invalid placement and mistaken placement of the advertisement, a failure in fulfilling the placement task, and so on.

The frequency capping of exposure refers to limiting the number of times an audience user watches a specific advertisement. The existing advertisement information may be delivered from the advertisement client on the terminal side to the application client, and may also be delivered from the application server on the network side to the application client on the terminal. Therefore, control over a total exposure frequency cannot be implemented in an accurate and controllable manner.

### SUMMARY OF THE INVENTION

The present invention provides a method, an apparatus and a system for placing an advertisement to implement control over a total exposure frequency in an accurate and controllable manner.

An embodiment of the present invention provides a method for placing an advertisement, including:
after receiving an advertisement placement request, selecting, by an advertisement client or an application server according to the advertisement placement request, advertisement information to be placed;
judging validity of the advertisement information according to advertisement metadata that is generated by an advertisement server and associated with the selected advertisement information; and
judging, according to the validity of the advertisement information, whether to place the advertisement information.

Another embodiment of the present invention provides an advertisement placing apparatus, including:
an advertisement selecting module, configured to select, according to a received advertisement placement request, advertisement information to be placed;
a validity judging module, configured to judge validity of the advertisement information according to advertisement metadata that is generated by an advertisement server and associated with the advertisement information selected by the advertisement selecting module; and
a placing module, configured to judge, according to the validity of the advertisement information, whether to place the advertisement information, where the validity is judged by the validity judging module.

Still another embodiment of the present invention provides an advertisement placing system, including an advertisement placing apparatus and an advertisement server.

The advertisement placing apparatus includes:
an advertisement selecting module, configured to select, according to a received advertisement placement request, advertisement information to be placed; and
a placing module, configured to judge, according to an advertisement placement instruction message sent by the advertisement server, whether to place the advertisement information.

The advertisement server includes:
a validity judging module, configured to judge validity of the advertisement information according to updated advertisement metadata that is stored locally; and
a placement instructing module, configured to send an advertisement placement instruction message to the advertisement placing apparatus according to the validity of the advertisement information, where the validity of the advertisement information is sent by the validity judging module.

Still another embodiment of the present invention provides an advertisement placing system, including an advertisement placing apparatus and an advertisement server.

The advertisement placing apparatus includes:
an update subscribing module, configured to send an advertisement update subscription request to the advertisement server; and
a placing module, configured to judge, according to an advertisement placement instruction message sent by the advertisement server, whether to place advertisement information.

The advertisement server includes:
a table creating module, configured to create, according to the advertisement update subscription request, a table of subscription mapping between subscribed advertisement information and an advertisement client or application server that requests for subscribing to the advertisement information;
a validity judging module, configured to judge, according to updated advertisement metadata that is stored in the advertisement server, validity of the advertisement information that is recorded in the table of subscription mapping; and
a placement instructing module, configured to send, according to the validity of the advertisement information, an advertisement placement instruction message to the advertisement client or application server recorded in the table of subscription mapping, where the validity of the advertisement information is judged by the validity judging module.

In the embodiments of the present invention, before the advertisement information buffered in the advertisement client or the application server is placed, the validity of the advertisement information is judged according to the advertisement metadata that is updated by the advertisement server and associated with the selected advertisement information. Therefore, a problem of asynchronization between the locally buffered advertisement metadata and the advertisement metadata that is registered by an advertiser on the advertisement server is solved, and thereby capping of the total exposure frequency on a terminal side and a network side is implemented in an accurate and controllable manner, so that an advertisement platform can avoid an invalid advertisement placement, a cost of the advertiser is reduced, and a return on an investment in the advertisement is improved.

### BRIEF DESCRIPTION OF THE DRAWINGS

FIG. 1 is a flowchart of a method for placing an advertisement according to a first embodiment of the present invention;

FIG. 2 is a specific flowchart of step 102 and step 103 in FIG. 1;

FIG. 3 is a flowchart of a method for placing an advertisement according to a second embodiment of the present invention;

FIG. 4 is a signaling chart of a method for placing an advertisement according to a second embodiment of the present invention;

FIG. 5 is a flowchart of a method for placing an advertisement according to a third embodiment of the present invention;

FIG. 6 is a signaling chart of a method for placing an advertisement according to a third embodiment of the present invention;

FIG. 7 is a flowchart of a method for placing an advertisement according to a fourth embodiment of the present invention;

FIG. 8 is a flowchart of a method for placing an advertisement according to a fifth embodiment of the present invention;

FIG. 9 is a signaling chart of a method for placing an advertisement according to a fifth embodiment of the present invention;

FIG. 10 is a flowchart of a method for placing an advertisement according to a sixth embodiment of the present invention;

FIG. 11 is a signaling chart of a method for placing an advertisement according to a sixth embodiment of the present invention;

FIG. 12 is a schematic diagram of a message format of an advertisement placement instruction message;

FIG. 13 is a schematic structural diagram of an advertisement placing apparatus that is used to implement the method for placing an advertisement according to the first embodiment of the present invention;

FIG. 14 is a schematic structural diagram of an advertisement placing system that is used to implement the method for placing an advertisement according to the second embodiment of the present invention;

FIG. 15 is a schematic structural diagram of an advertisement placing apparatus that is used to implement the method for placing an advertisement according to the third embodiment of the present invention;

FIG. 16 is a schematic structural diagram of an advertisement placing system that is used to implement the method for placing an advertisement according to the fourth embodiment of the present invention;

FIG. 17 is a schematic structural diagram of an advertisement placing system that is used to implement the method for placing an advertisement according to the fifth embodiment of the present invention;

FIG. 18 is a schematic structural diagram of an advertisement placing system that is used to implement the method for placing an advertisement according to the sixth embodiment of the present invention; and

FIG. 19 is a schematic diagram of interfaces of each part in a practical mobile advertisement system.

### DETAILED DESCRIPTION OF THE EMBODIMENTS

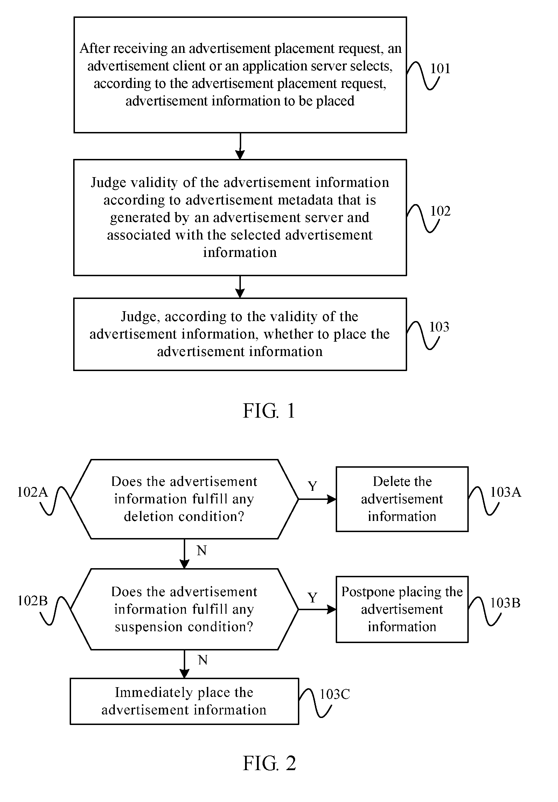

FIG. 1 is a flowchart of a method for placing an advertisement according to a first embodiment of the present invention. As shown in FIG. 1, the method includes the following steps:

Step 101: After receiving an advertisement placement request, an advertisement client or an application server selects, according to the advertisement placement request, advertisement information to be placed.

The advertisement placement request may come from an application client (Ad App) on a terminal. When an audience user runs a game program or opens a Web page, the application client sends an advertisement placement request. The advertisement placement request may carry one or more of the following advertisement parameters: a user identifier, a service provider identifier or an advertisement client identifier, terminal information (such as a model), context data, an advertisement provider, an advertisement slot identifier, an advertisement size, advertisement dimensions, and so on.

The selecting, according to the advertisement placement request, the advertisement information to be placed may be specifically as follows: The advertisement client or the application server selects an advertisement in a local buffer. If the advertisement information is not found in the local buffer, an advertisement selection request may be sent to an advertisement server so that the advertisement information selected by the advertisement server is received. Specifically, at the time of selecting the advertisement, the selection of the advertisement information may be performed according to one or more of the advertisement parameters carried in the advertisement placement request.

Step 102: Judge validity of the advertisement information according to advertisement metadata that is generated by the advertisement server and associated with the selected advertisement information.

Step 102 comes in two scenarios. One scenario is: The validity judgment is implemented by the advertisement client or the application server; and the other scenario is: The validity judgment is implemented by the advertisement server. The detailed process of judging the validity may be described in each of the following method embodiments respectively.

Before the validity of the advertisement information is judged, whether a validity check needs to be performed on the advertisement information may be judged according to validity instruction information in the advertisement metadata. The validity of the advertisement information starts to be judged after it is judged that the validity check needs to be performed on the advertisement information.

An advertiser limits advertisement placement policies such as an overall budget or a daily budget, and the total number of advertisement placements and/or frequency capping of exposure for an activity of advertisement placement. Validity check instruction information may be formulated and preset by the advertisement server into the advertisement client or the application server, or set by the advertisement client (such as a user) or the application server itself. The setting method is not particularly restricted. For example, the validity check instruction information may be delivered through a message, or formulated at the time of service subscription. Whether the validity check needs to be performed may be judged according to instruction content of the validity check instruction information.

Generally, for a single piece of advertisement information, the advertisement server, the advertisement client, and the application server all store advertisement metadata (Ad Metadata) of the advertisement information. The advertisement metadata may include one or more of the following items: an advertisement identifier, advertisement slot information, a Multipurpose Internet Mail Extensions (Multipurpose Internet Mail Extensions, MIME for short) type, an MIME version, a position for storing the advertisement, an advertisement size, an advertisement interaction type, a uniform resource identifier (Uniform Resource Identifier, URI for short) for advertisement interaction, advertisement width, advertisement height, advertisement length, an advertisement keyword, time in which the advertisement is presentable, a validity period, frequency information, a priority, and so on. In addition, the advertisement server needs to perform macro control. The advertisement metadata information stored by the advertisement server is richer, and may include other information such as capping of the total exposure frequency, the total number of advertisement placements, and an advertisement placement policy and/or a metric data collection policy.

In this step, if the advertisement to be placed is selected from the local buffer of the advertisement client or the application server, a validity request or an advertisement metadata request needs to be sent to the advertisement server, or a judgment is directly made according to buffered advertisement metadata. If the advertisement to be placed is requested from the advertisement server, the advertisement server implements the validity judgment, and sends a validity instruction to the advertisement client or the application server.

Step 103: Judge, according to the validity of the advertisement information, whether to place the advertisement information.

Specifically, when the advertisement information is valid, the advertisement information is placed immediately; when the advertisement information is invalid at present, placement of the advertisement information is postponed; when the advertisement information is completely invalid, the advertisement information is deleted and not placed. For details, see the following description.

As shown in FIG. 2, step 102 and step 103 may specifically include the following steps: Step 102 may include step 102A and step 102B, and step 103 may include steps 103A, 103B, and 103C.

Step 102A: Judge whether the advertisement information fulfills any deletion condition. If it is judged that the advertisement information fulfills no deletion condition, it is indicated that the advertisement information is possibly valid; in this case, the process proceeds to step 102B. If it is judged that the advertisement information fulfills any deletion condition, it is indicated that the advertisement information is completely invalid; in this case, the process proceeds to step 103A.

Deletion conditions may include the following: The validity period of the advertisement information has expired; the total number of exposures of the advertisement information is reached; the overall budget of the advertisement information is used up; and the advertisement information is cancelled. A specific description is as follows:

A process of judging the validity period is as follows: Judge whether current time exceeds start time (ValidStartTime) and end time (ValidEndTime) of the validity period in the advertisement metadata; if so, the advertisement information is invalid; if the current time falls within the validity period, the advertisement information is valid.

A process of judging the total number of exposures is as follows: The advertisement server collects beforehand metric data reported by the advertisement client or the application server. The metric data includes the number of exposures (that is, the number of "Impressions" or the number of clicks); the advertisement server compares a preset (that is, purchased by the advertiser) total number of exposures with the currently collected total number of exposures to judge whether the existing number of exposures exceeds the preset value; if the existing number of exposures exceeds the preset value, the advertisement is placed excessively and needs to be invalidated; if the existing number of exposures does not exceed the preset value, the placements are insufficient, and the advertisement needs to be further placed and is valid.

A process of judging the overall budget is as follows: Calculate an expense according to the collected metric data; if the consumed expense is less than the budget, the advertisement needs to be further placed and is valid; if the consumed expense exceeds the budget, the advertisement does not need to be placed any longer and is invalid. A process of judging cancellation of the advertisement information is as follows: If the advertiser decides to cancel the advertisement (for example, for lack of a fund) or the advertisement server (for example, an operation policy of an operator judges that the advertisement needs to be cancelled), the advertisement server marks or deletes the cancelled advertisement.

Step 102B: Judge whether the advertisement information fulfills any suspension condition. If it is judged that the advertisement information fulfills no suspension condition, it is indicated that the advertisement information is valid; in this case, the process proceeds to step 103C. If it is judged that the advertisement information fulfills any suspension condition, it is indicated that the advertisement information is invalid at present; in this case, the process proceeds to step 103B.

Suspension conditions may include the following: The daily budget of the advertisement information is used up, and/or the frequency capping of exposing the advertisement information to an audience user is reached. A specific description is as follows:

A process of judging the daily budget is similar to the process of judging the overall budget; a difference lies in that statistics and judgments are performed on a daily basis. That is because the advertiser sometimes requires that a budget and an arrangement are performed for every day. The advertiser does not expect to place the advertisement too densely or too sparsely.

A process of judging the frequency capping with respect to a single user is similar to the process of judging the total frequency; a difference lies in that statistics and judgments are performed with respect to only a single user. That is because the advertiser sometimes requires that a placement arrangement is performed with respect to a single user. The advertiser does not expect to place the advertisement to a single user too many times or too few times, because such a placement does not have a good advertisement effect.

Step 103A: When any deletion condition is fulfilled, it is indicated that the advertisement information is completely invalid. In this case, delete the advertisement information and do not place the advertisement information.

Step 103B: When any suspension condition is fulfilled, it is indicated that the advertisement information is invalid at present. In this case, postpone placing the advertisement information.

The time of renewing the postponed placement may be set according to conditions such as the frequency capping of exposure. For example, based on collection and statistics of the metric data, the advertisement server needs to postpone placement of an advertisement to the next day or the next week to achieve a better placement effect if the number of times of placing the advertisement in a day exceeds the frequency capping of the day. The postponement time depends on a policy defined by the advertisement server or the advertiser.

Step 103C: When none of the deletion conditions and suspension conditions is fulfilled, it is indicated that the advertisement information is valid. In this case, place the advertisement information immediately.

It should be noted that if the advertiser updates an advertisement orientation condition, that is, updates a condition of a target audience who receives the advertisement information or updates a condition of a target service that carries the advertisement, in the metadata before the advertisement information is placed, advertisement selection is performed again and whether the advertisement meets the advertisement parameters is checked according to the advertisement parameters (such as context data) carried in the advertisement placement request. The advertisement orientation condition may include orientation to a user and orientation to content and/or a service that carries the advertisement. If the user meets the advertisement orientation condition but the service does not, the advertisement cannot be placed on the present occasion, but may be placed on the next occasion. Therefore, the advertisement metadata needs to be updated. If neither of the orientation conditions is fulfilled, even if the metadata is updated, the advertisement will not be selected in the local buffer. In this case, the advertisement may be deleted through a maintenance mechanism of the local buffer.

By using the method described in this embodiment, before the advertisement information is placed, the validity of the advertisement information is judged according to the advertisement metadata that is updated by the advertisement server and associated with the selected advertisement information. Therefore, a problem of asynchronization between the locally buffered advertisement metadata and the advertisement metadata that is registered by the advertiser on the advertisement server is solved, and thereby the capping of the total exposure frequency on a terminal side and a network side is implemented in an accurate and controllable manner, so that an advertisement platform can avoid an invalid advertisement placement, a cost of the advertiser is reduced, and a return on an investment in the advertisement is improved.

It should be noted that if the application server or the advertisement client has ordered the advertisement exposures in batches from the advertisement server, the advertisement may be directly placed without a need of judging the validity of the advertisement information when the number of the ordered advertisement exposures is not reached.

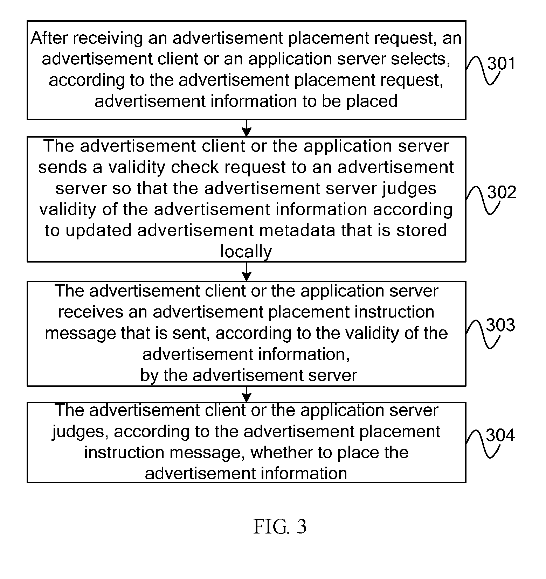

FIG. 3 is a flowchart of a method for placing an advertisement according to a second embodiment of the present invention. As shown in FIG. 3, the method includes:

Step 301: After receiving an advertisement placement request, an advertisement client or an application server selects, according to the advertisement placement request, advertisement information to be placed.

For details, see the relevant description in step 101 shown in FIG. 1. No further description is provided here.

In this embodiment, judgment on validity of the advertisement information is implemented by an advertisement server, which specifically includes steps 302-304 below.

Step 302: The advertisement client or the application server sends a validity check request to the advertisement server so that the advertisement server judges the validity of the advertisement information according to updated advertisement metadata that is stored locally.

The validity check request may carry advertisement parameters such as an advertisement identifier (ID) of the advertisement information to be checked and/or an audience user identifier (ID), so that the advertisement server knows the advertisement information whose validity needs to be checked. A detailed process of updating the advertisement metadata is as follows: The advertisement server collects metric data from the advertisement client and the application server, and modifies frequency capping (FrequencyCap information); and modifies, based on an internal policy of the advertisement server or a requirement of an advertiser, a validity period, a priority, and time in which the advertisement is presentable.

For the detailed process of judging the validity of the advertisement information according to the advertisement metadata, see the relevant description in the first embodiment.

Step 303: The advertisement client or the application server receives an advertisement placement instruction message that is sent, according to the validity of the advertisement information, by the advertisement server.

The advertisement placement instruction message is sent by the advertisement server according to the validity of the advertisement information. That is, after judging the validity of the advertisement information, the advertisement server sends the advertisement placement instruction message to the advertisement client or the application server. The advertisement placement instruction message may include advertisement processing instruction information used to instruct the application server or the advertisement client on how to process locally buffered advertisement information. For example, the processing methods may include: immediately placing the advertisement information, deleting the advertisement information, postponing placing the advertisement information, and so on.

Step 304: The advertisement client or the application server judges, according to the advertisement placement instruction message, whether to place the advertisement information.

When the advertisement client or the application server receives the advertisement placement instruction message sent by the advertisement server, step 103 in the first embodiment may be as follows: The advertisement client or the application server judges, according to the advertisement placement instruction message, whether to place the advertisement information.

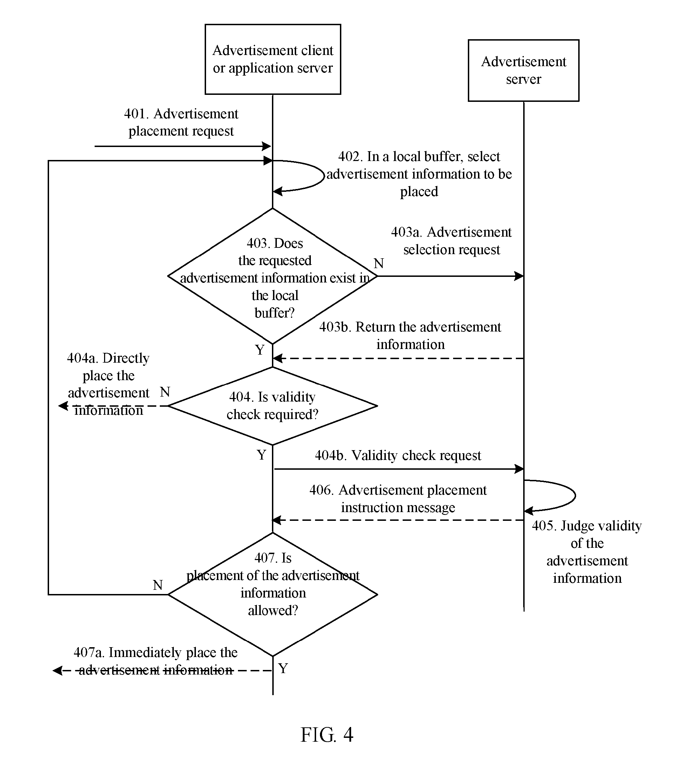

FIG. 4 is a specific signaling flowchart of a method according to a second embodiment of the present invention. The method includes the following signaling process:

401: An advertisement client or an application server receives an advertisement placement request. For details about this step, see the relevant description in the preceding embodiment.

402: According to the advertisement placement request, select, in a local buffer, advertisement information to be placed, that is, select advertisement information that meets an advertisement parameter.

403: Check whether any requested advertisement information exists in the local buffer; if the requested advertisement information exists in the local buffer, the selection is successful; in this case, the process proceeds to step 404; if no requested advertisement information exists in the local buffer, the process proceeds to step 403a.

403a: Send an advertisement selection request to an advertisement server (Ad server).

403b: The advertisement server selects the required advertisement information according to the advertisement selection request, and returns the required advertisement information to the advertisement client or the application server.

404: Judge whether a validity check (Check) needs to be performed on the selected advertisement information; if the validity check needs to be performed, the process proceeds to 404b; if the validity check does not need to be performed, the process proceeds to 404a.

404a: Directly place the selected advertisement information. The process ends.

404b: Send a validity check request to the advertisement server.

405: The advertisement server judges validity of the advertisement information according to updated advertisement metadata that is stored in the advertisement server. For details of judging whether the advertisement information meets a deletion condition or a suspension condition, see the relevant description in the preceding embodiment. No further description is provided here.

406: The advertisement server sends an advertisement placement instruction message to the advertisement client or the application server according to the judged validity of the advertisement information.

407: According to the advertisement placement instruction message, the advertisement client or the application server judges whether placement of the advertisement information is allowed. If the placement of the advertisement information is allowed, the process proceeds to 407a; if the placement of the advertisement information is not allowed, corresponding processing, for example, deleting or postponing placing, is performed on the advertisement information according to the advertisement placement instruction message, and the process returns to step 402 to reselect the requested advertisement information or postpone placing the advertisement information.

407a: Immediately place the advertisement information.

The advertisement placement instruction message returned by the advertisement server may be expressed in an Extensible Markup Language (Extensible Markup Language, XML for short) as follows:
1. The advertisement is allowed to be placed, and advertisement-related data does not need to be modified in the buffer.

   ```
          <placement-decision>
                         <adid>XX</adid>
                         <decision>Y</decision>
                         <action>keep</action>
          </placement-decision>
```
2. The advertisement is allowed to be placed; at the same time, a notification of modifying the advertisement-related data in the buffer is sent.

   ```
          <placement-decision>
                         <adid>XX</adid>
                         <decision>Y</decision>
                         <action>update<laction>
                         <AdContentData>XXX</AdContentData>
          </placement-decision>
```
3. The advertisement is not allowed to be placed, and a notification of deleting the advertisement-related data in the buffer is sent.

   ```
          <placement-decision>
                         <adid>XX</adid>
                         <decision>N</decision>
                         <action>delete</action>
          </placement-decision>
```
4. The placement of the advertisement is suspended, and time of renewing the placement of the advertisement is set.

   ```
          <placement-decision>
                         <adid>XX</adid>
                         <decision>N</decision>
                         <action>keep</action>
                       <renew-start-time>2009.7.1</renew-start-time>
          <renew-end-time>2009.7.</renew-end-time>
          </placement-decision>
```
5. The advertisement is not allowed to be placed, and the advertisement-related data is modified.

   ```
          <placement-decision>
                         <adid>XX</adid>
                         <decision>N</decision>
                         <action>update</action>
                         <AdContentData>XXX</AdContentData>
          </placement-decision>
```

In the prior art, when carrying out an advertisement activity, the advertiser sets an advertisement objective, for example, audience coverage of the advertisement in a specified period, an impact on target audience, and so on. To achieve high advertisement coverage in a limited advertisement budget range and bring an effective impact on the audience, the advertiser specifies the total number of exposures of the advertisement and restricts the frequency of each audience watching the advertisement in placement policy information in the advertisement metadata. If each audience watches the advertisement too frequently, the coverage of the advertisement becomes smaller with the limited budget. Meanwhile, advertisement flooding performed to the audience may make the advertisement be loathsome to the audience. If each audience watches the advertisement too infrequently, the advertisement brings no significant impact on the audience. In addition, when an advertisement platform places the advertisement of the advertiser, if the total number of exposures is lower than the budget, the advertiser will impose a penalty. Therefore, at the time of performing advertisement placement, the total number of exposures of the advertisement and the advertisement frequency need to be controlled at the same time. However, when the advertiser needs to update the placement policy information in the advertisement metadata, only the advertisement metadata on the advertisement server is updated, which leads to a problem of update asynchronization between the advertisement metadata locally buffered on the application server and the advertisement client and the advertisement metadata stored on the advertisement server.

By using the method described in this embodiment, a validity check request is sent to the advertisement server before the advertisement is placed. The advertisement server judges the validity of the advertisement information according to the updated advertisement metadata that is stored in the advertisement server. Therefore, the problem of update asynchronization between the advertisement metadata locally buffered on the application server and the advertisement client and the advertisement metadata stored on the advertisement server is solved, and thereby the capping of the total exposure frequency is implemented in an accurate and controllable manner, so that the penalty (Penalty) caused by insufficient placements is reduced, the advertisement platform can avoid an invalid advertisement placements and an advertisement slot resource loss that is caused by excessive advertisement placements, harassment on the advertisement audience is prevented, futile advertisement expenses are reduced, a cost of the advertiser is reduced, and a return on an investment in the advertisement is improved.

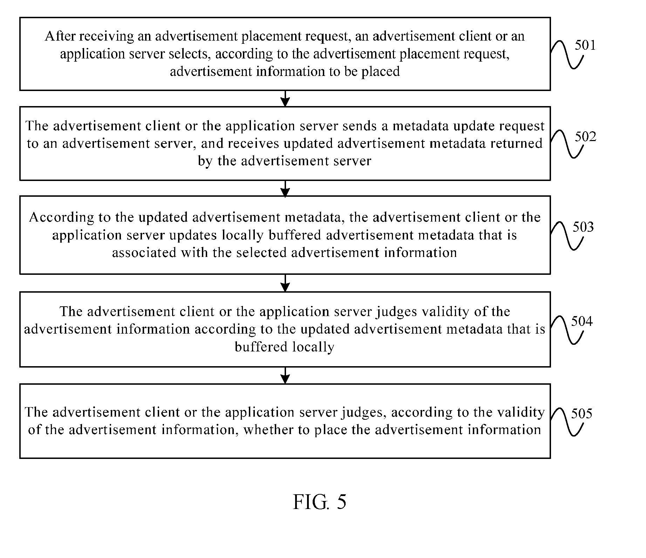

FIG. 5 is a flowchart of a method for placing an advertisement according to a third embodiment of the present invention. As shown in FIG. 5, the method includes the following steps:

Step 501: After receiving an advertisement placement request, an advertisement client or an application server selects, according to the advertisement placement request, advertisement information to be placed.

For details, see the relevant description in step 101 shown in FIG. 1. No further description is provided here.

In this embodiment, judgment on validity of the advertisement information is implemented by the advertisement client or the application server, which specifically includes steps 502-504 below.

Step 502: The advertisement client or the application server sends a metadata (metadata) update request to an advertisement server, and receives updated advertisement metadata returned by the advertisement server.

Specifically, the metadata update request may carry advertisement parameters such as an advertisement identifier (ID) of the advertisement information to be checked and/or an audience user identifier (ID), so that the advertisement server knows the advertisement information whose advertisement metadata needs to be updated.

Step 503: According to the updated advertisement metadata, the advertisement client or the application server updates locally buffered advertisement metadata that is associated with the selected advertisement information.

The received updated advertisement metadata that is sent by the advertisement server includes advertisement metadata that is generated after an advertiser performs modification and updating according to a placement effect. For example, an orientation condition and a placement policy in the advertisement metadata are modified. For a specific process of updating the advertisement metadata, see the description in the foregoing step 302. In addition, a change of advertisement data such as the remaining number of advertisement exposures and the remaining budget after a period of placement may also be included.

Step 504: The advertisement client or the application server judges the validity of the advertisement information according to the updated advertisement metadata that is buffered locally.

The specific process of judging the validity of the advertisement information may include judging whether an updated deletion condition and/or suspension condition is fulfilled and so on. For the detailed process, see the relevant description in each of the preceding embodiments. No further description is provided here.

Step 505: The advertisement client or the application server judges, according to the validity of the advertisement information, whether to place the advertisement information.

For specific content of the validity of the advertisement information, see the relevant description in each of the preceding embodiments. No further description is provided here.

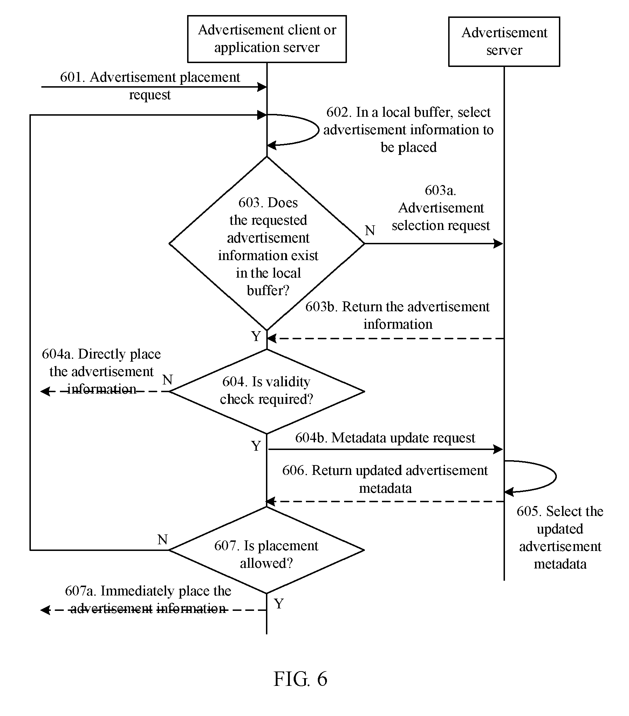

FIG. 6 is a specific signaling flowchart of a method according to a third embodiment of the present invention. The method includes the following signaling process:

601 to 603b are performed to select advertisement information. For details, see 401 to 403b shown in FIG. 4.

604: Judge whether a validity check (Check) needs to be performed for the selected advertisement information; if the validity check needs to be performed, the process proceeds to 604b; if the validity check does not need to be performed, the process proceeds to 604a. For the detailed process of judging whether the validity check needs to be performed, see the relevant description in each of the preceding embodiments. No further description is provided here.

604a: Directly place the selected advertisement information. The process ends.

604b: Send a metadata update request to the advertisement server.

605: The advertisement server selects updated advertisement metadata according to the metadata check request.

606: The advertisement server returns the updated advertisement metadata.

607: The advertisement client or the application server judges validity of the advertisement information according to the updated advertisement metadata that is buffered locally, and decides whether placement is allowed accordingly. If the placement is allowed, the placement is performed immediately; in this case, the process proceeds to 607a; if the placement is not allowed, corresponding processing, for example, deleting or postponing placing, is performed on the advertisement information according to the judged validity; in this case, the process returns to step 602 to reselect the requested advertisement information or postpone placing the advertisement information.

607a: Immediately place the advertisement information.

The metadata update request sent to the advertisement server and the updated advertisement metadata returned by the advertisement server may be expressed in an XML as follows:
1. Requesting the advertisement metadata:

   ```
          <AdEngineMetadataRequest>
                 <AdID>XX</AdID>
                <UserID>YY</UserID>
          </AdEngineMetadataRequest>
```
2. Returning the advertisement metadata:

   ```
          <AdEngineMetadataResponse>
                 <AdID>XX</AdID>
                <UserID>YY</UserID>
                    <AdMetadata>
                         <ValidStartTime>2009-7-7</ValidStartTime>
          <ValidEndTime>2009-7-10</ValidEndTime>
          <FrequencyCap>2</FrequencyCap>
                    </AdMetadata>
          </AdEngineMetadataResponse>
```

The method in this embodiment differs from the embodiment in FIG. 3 in that: the judgment on the validity of the advertisement information is not performed by the advertisement server, but is performed by the application server and the advertisement client based on the updated advertisement metadata that is obtained from the advertisement server. In this way, an objective of capping of the total exposure frequency is implemented in an accurate and controllable manner, and a processing load of the advertisement server is relieved.

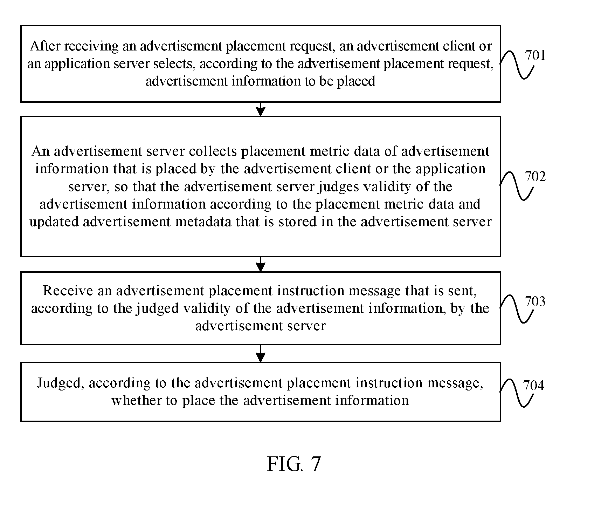

FIG. 7 is a flowchart of a method for placing an advertisement according to a fourth embodiment of the present invention. As shown in FIG. 7, the method includes the following steps:

Step 701: After receiving an advertisement placement request, an advertisement client or an application server selects, according to the advertisement placement request, advertisement information to be placed.

For details, see the relevant description in step 101 shown in FIG. 1. No further description is provided here.

In this embodiment, judgment on validity of the advertisement information is implemented by an advertisement server. The specific process may include steps 702 and 703.

Step 702: The advertisement server collects displacement metric data of advertisement information that is placed by the advertisement client or the application server, so that the advertisement server judges the validity of the advertisement information according to updated advertisement metadata that is stored in the advertisement server and the displacement metric data.

Step 703: The advertisement client or the application server receives an advertisement placement instruction message that is sent, according to the judged validity of the advertisement information, by the advertisement server.

For detailed content of the advertisement placement instruction message, see the relevant description in each of the preceding embodiments. No further description is provided here.

Step 704: Judge, according to the advertisement placement instruction message, whether to place the advertisement information.

When the advertisement client or the application server receives the advertisement placement instruction message sent by the advertisement server, step 103 in the first embodiment may be as follows: The advertisement client or the application server judges, according to the advertisement placement instruction message, whether to place the advertisement information.

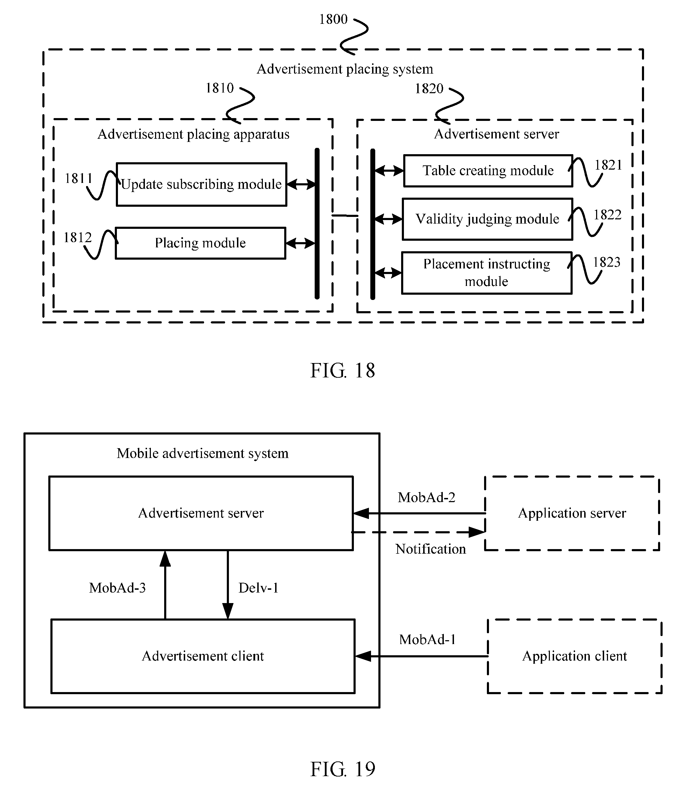

Specifically, FIG. 19 is a schematic diagram of interfaces of each part in a practical mobile advertisement system. In FIG. 19, the application server may send various messages to the advertisement server through a "MobAd-2" interface; the advertisement client may exchange information with the advertisement server through a "MobAd-3" interface and a "Delv-1" interface; and an application client may send various messages to the advertisement server through a "MobAd-1" interface. The advertisement placement instruction message described in this embodiment of the present invention may be sent to the application server through a notification (Notification) interface between the advertisement server and the application server, or may be carried in an advertisement response message that responds to an advertisement request message sent by the application server; and may be sent to the advertisement client through the "Delv-1" interface between the advertisement server and the advertisement client, or may be carried in an advertisement response message that responds to an advertisement request message sent by the advertisement client. In FIG. 19, a solid box indicates an internal component (componet) of the mobile advertisement system; a dotted box indicates an entity (entity) located outside the mobile advertisement system; a solid arrow indicates a mandatory interface (Mandatory Interface); and a dotted arrow indicates an optional interface (Optional Interface).

For example, an instance of an advertisement response message that is sent by the advertisement server to the advertisement client and carries an advertisement deletion indication is as fellow0073:

```
          <AdEngineAdResponse>
                <AdContentData AdId="XX">Ad Content Data</AdContentData>
                <DeletedAdId>AdId_Example</DeletedAdId>
          </AdEngineAdResponse>
```

An instance of a notification message that is directly sent by the advertisement server to the advertisement client and carries the advertisement deletion indication is as follows:

```
          <AdServerPushNotification>
               <NotificationType>Ad Deletion</NotificationType>
               <AdId> AdId_Example</AdId>
          </AdServerPushNotification>
```

For the application server, a message delivered by the advertisement server is similar to the preceding and is not described here.

As described in the preceding, when the validity is judged, judging whether the advertisement information fulfills any deletion condition or any suspension condition may be included. For example, after the total number of advertisement exposures that is recorded in the advertisement placement metric data is reached, it is indicated that an objective of placing the advertisement information is implemented and the advertisement information is invalid; in this case, an advertisement deletion instruction message is sent to instruct the advertisement client or the application server to delete the locally buffered advertisement information; after the frequency capping of exposing the advertisement information to a specified audience user is reached, an advertisement placement capping instruction message is sent to instruct the advertisement client or the application server to suspend placing the advertisement information within the specified period of time; the validity can renew only after a period of time; therefore, the advertisement information can be still stored in the local buffer rather than being deleted.

By using the method described in this embodiment, the advertisement server actively collects the placement metric data of the placed advertisement information, implements the validity check on the advertisement information according to the updated advertisement metadata that is stored in the advertisement server, and sends an advertisement placement instruction message to the advertisement client or the application server in an active push mode, which implements an objective of implementing, in an accurate and controllable manner, capping of the total exposure frequency.

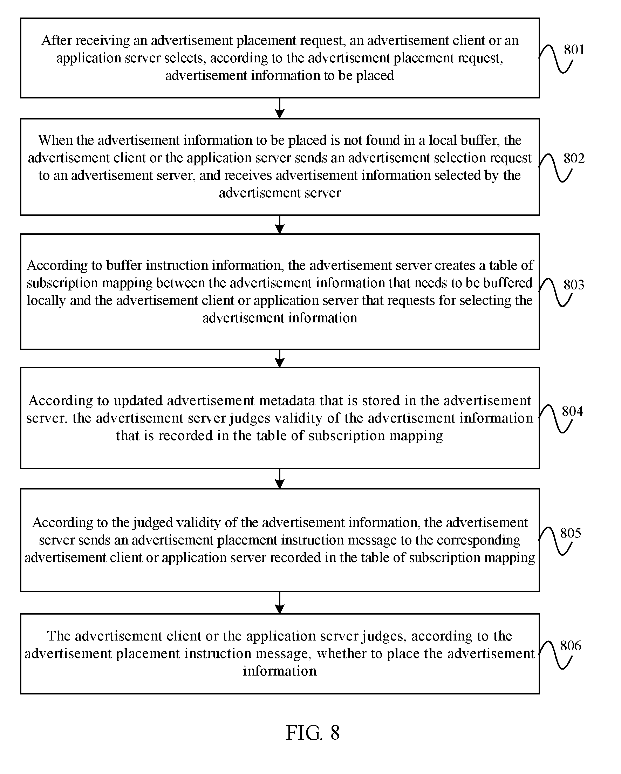

FIG. 8 is a flowchart of a method for placing an advertisement according to a fifth embodiment of the present invention. As shown in FIG. 8, the method includes the following steps:

Step 801: After receiving an advertisement placement request, an advertisement client or an application server selects, according to the advertisement placement request, advertisement information to be placed.

For details, see the relevant description in step 101 shown in FIG. 1.

In this embodiment, judgment on validity of the advertisement information is implemented by an advertisement server. The specific process may include steps 802-805.

Step 802: When no advertisement information to be placed is found in a local buffer, the advertisement client or the application server sends an advertisement selection request to the advertisement server, and receives advertisement information selected by the advertisement server, where the advertisement selection request includes buffer instruction information that is used to indicate whether the selected advertisement information needs to be stored locally.

Step 803: According to the buffer instruction information, the advertisement server creates a table of subscription mapping between the advertisement information that needs to be buffered locally and the advertisement client or application server that requests for selecting the advertisement information.

Step 804: According to updated advertisement metadata that is stored in the advertisement server, the advertisement server judges the validity of the advertisement information that is recorded in the table of subscription mapping.

For the specific process of judging the validity of the advertisement information, see the relevant description in each of the preceding embodiments. No further description is provided here.

Step 805: According to the judged validity of the advertisement information, the advertisement server sends an advertisement placement instruction message to the corresponding advertisement client or application server recorded in the table of subscription mapping.

For specific content of the advertisement placement instruction message, see the relevant description in each of the preceding embodiments. No further description is provided here.

Step 806: The advertisement client or the application server judges, according to the advertisement placement instruction message, whether to place the advertisement information.

When the advertisement client or the application server receives the advertisement placement instruction message sent by the advertisement server, step 103 in the first embodiment may be as follows: The advertisement client or the application server judges, according to the advertisement placement instruction message, whether to place the advertisement information.

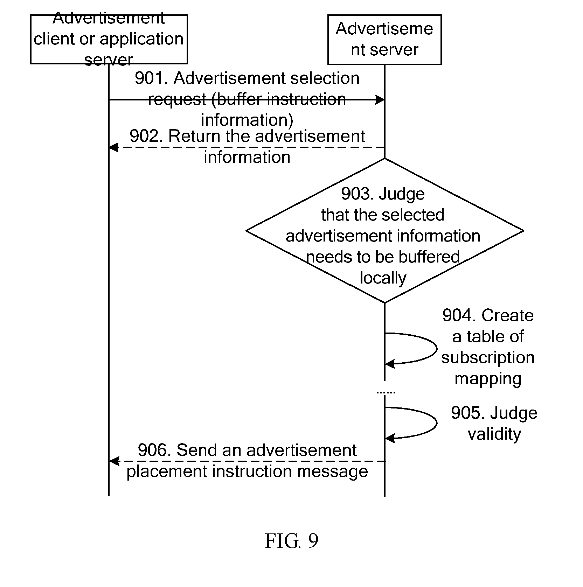

The following describes a signaling process of the method in this embodiment by using an example. As shown in FIG. 9, the method includes the following process:

901: The advertisement client or the application server sends an advertisement selection request to the advertisement server, where the advertisement selection request includes buffer instruction information.

902: The advertisement server returns the selected advertisement information.

903: According to the buffer instruction information, judge that the selected advertisement information needs to be buffered locally.

904: According to the buffer instruction information, create a table of subscription mapping between the advertisement information that needs to be buffered locally and the advertisement client or application server that requests for selecting the advertisement information.

905: Judge the validity.

906: Send an advertisement placement instruction message.

By using the method described in this embodiment, in an implicit subscription mode, the advertisement server automatically creates a table of subscription mapping for the advertisement information that needs to be buffered locally, and according to the updated advertisement metadata that is stored in the advertisement server, judges the validity of the advertisement information that is recorded in the table of subscription mapping, so as to implement an objective of accurately controlling the total number of exposures and frequency capping of exposure.

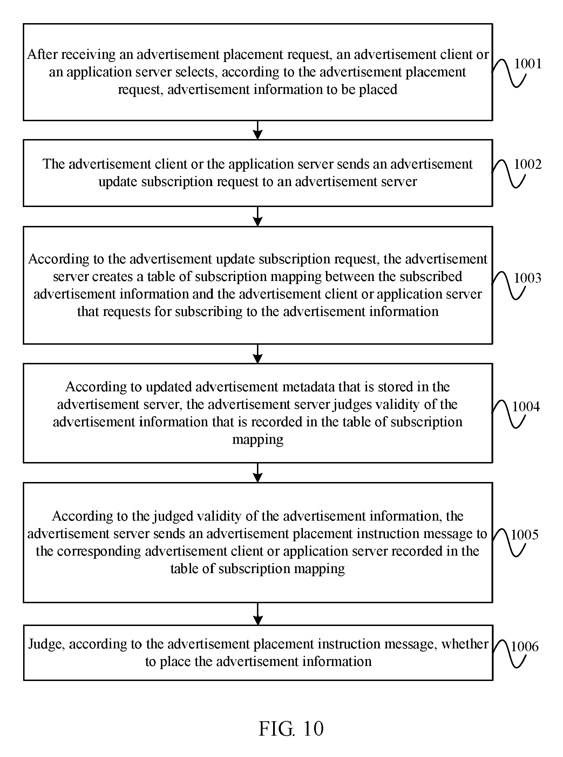

FIG. 10 is a flowchart of a method for placing an advertisement according to a sixth embodiment of the present invention. As shown in FIG. 10, the method includes the following steps:

Step 1001: After receiving an advertisement placement request, an advertisement client or an application server selects, according to the advertisement placement request, advertisement information to be placed.

For details, see the relevant description in step 101 shown in FIG. 1. No further description is provided here.

In this embodiment, judgment on validity of the advertisement information is implemented by an advertisement server. The specific process may include steps 1002-1005.

Step 1002: The advertisement client or the application server sends an advertisement update subscription request to the advertisement server.

Specifically, the advertisement update subscription request includes an advertisement list so as to subscribe to a message for updating the advertisement information listed in the advertisement list.

Step 1003: According to the advertisement update subscription request, the advertisement server creates a table of subscription mapping between the subscribed advertisement information and the advertisement client or application server that requests for subscribing to the advertisement information.

Step 1004: According to updated advertisement metadata that is stored in the advertisement server, the advertisement server judges the validity of the advertisement information that is recorded in the table of subscription mapping.

For the detailed process of judging the validity, see the relevant description in each of the preceding embodiments. No further description is provided here.

Step 1005: According to the judged validity of the advertisement information, the advertisement server sends an advertisement placement instruction message to the corresponding advertisement client or application server recorded in the table of subscription mapping.

Step 1006: Judge, according to the advertisement placement instruction message, whether to place the advertisement information.

When the advertisement client or the application server receives the advertisement placement instruction message sent by the advertisement server, step 103 in the first embodiment may be as follows: The advertisement client or the application server judges, according to the advertisement placement instruction message, whether to place the advertisement information.

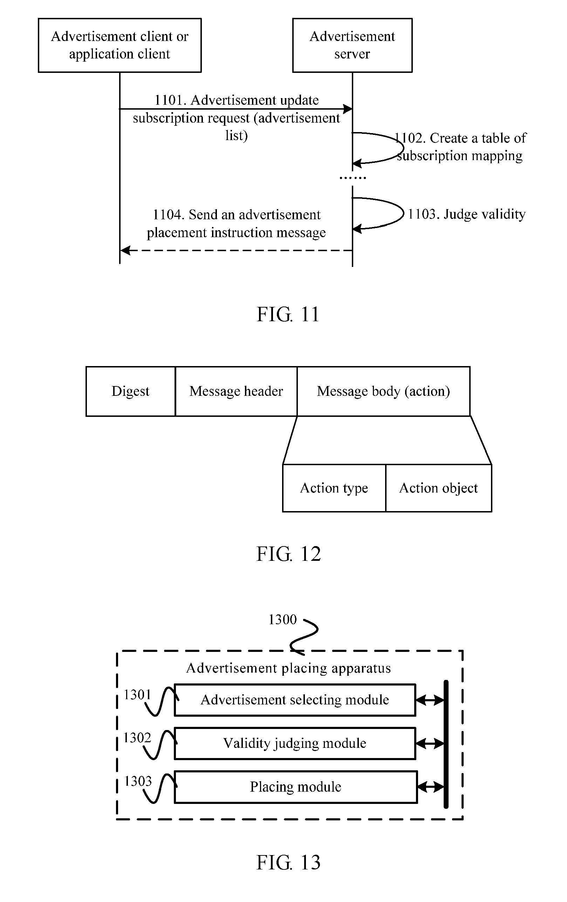

As shown in FIG. 11, a signaling process of a method according to a sixth embodiment of the present invention includes the following steps:

1101: An advertisement client or an application server sends an advertisement update subscription request to an advertisement server, where the advertisement update subscription request includes a list of advertisements that need to be subscribed to.

1102: According to the advertisement update subscription request, create a table of subscription mapping between subscribed advertisement information and the advertisement client or application server that requests for subscribing to the advertisement information.

1103: Judge validity.

1104: Send an advertisement placement instruction message.

The advertisement update subscription request sent to the advertisement server and the advertisement placement instruction message returned by the advertisement server may be expressed in an XML as follows:
1. Advertisement update subscription request:

   ```
          <SPAppSubscribe>
                 <AdID>XX1</AdID>
          <AdID>XX2</AdID>
                <SPID>YY<SPID>
          </SPAppSubscribe>
```
2. Advertisement placement instruction message:

   ```
<SPAppNotification>
                 <AdID>XX1</AdID>
          <SPID>YY<SPID>
                <Action>Delete</Action>
          </SPAppNotification>
```

By using the method described in this embodiment, in an explicit subscription mode, the advertisement client or the application server actively subscribes to a message for updating advertisement information to be updated from the advertisement server; the advertisement server creates a table of subscription mapping, and according to updated advertisement metadata that is stored in the advertisement server, judges the validity of the advertisement information that is recorded in the table of subscription mapping, so as to fulfill an objective of accurately controlling the total number of exposures and capping of exposure frequency.

Persons of ordinary skill in the art may understand that all or part of the steps of the methods according to the preceding embodiments of the present invention may be implemented by a program instructing relevant hardware. The program may be stored in a computer readable storage medium. When the program runs, steps of the methods in the preceding embodiments are performed. The storage medium may be any medium capable of storing a program code, such as a Read Only Memory (ROM), a Random Access Memory (RAM), a magnetic disk, or a Compact Disk-Read Only Memory (CD-ROM).

In the embodiments shown in FIG. 7, FIG. 8, and FIG. 10, a format of the advertisement placement instruction message is exemplified in FIG. 12, and each of the fields of the message is described in Table 1.

**Table 1**

| Message Field | Description |
|---|---|
| Digest (Digest) | This field is used to authenticate validity and security of the message. |
| Message header (Header) | This field includes information such as a message sender, a message receiver, and length of a message body. |
| Message body (Body) | This field is used to describe detailed content of the notification message, that is, imply which operation needs to be performed and which advertisements need to be operated after the receiver receives the notification message. The message body specifically includes: |
| | Action type (Action-type): expressed by a value; and |
| | Action object (Action-object): A value of the action object is an update object indicated by the notification, and may be an advertisement identifier, an advertisement identifier list, an advertisement activity identifier, and the corresponding modification content. |

The action type (Action type) shown in Table 1 may be expressed by a specified value, and each value and the corresponding meaning are described in Table 2.

**Table 2**

| Action Type | Description |
|---|---|
| 1 | Advertisement content or an advertisement activity is cancelled, and the receiver is instructed to delete buffered advertisement content. |
| 2 | Notify the receiver that advertisement metadata or a placement policy of an advertisement or some advertisements in the buffer is modified to instruct the receiver to perform an update. |
| 3 | Instruct the receiver to report metric (metrics) data. |
| 4 | Instruct the receiver to obtain new advertisement content. |
| 5-10 | Reserved value. |

For example, the advertisement placement instruction message may be expressed in an XML as follows, where notification messages of deleting an advertisement, updating advertisement metadata, and requesting for reporting advertisement metrics are described:

```
          <?xml version="1.0" encoding="UTF-8"?>
          <notification>
            <digest>XX</digest>

            <header>
                 <sender>XX</sender>
                 <reciever>XX</reciever>
                 <msglength>XX</msglength>
            </header>

            <body>
                 //notification for deleting ads
                 <Action>
                     <Action-type> 1 </Action-type>
                     <action-obj ect>
                         <ADID>A1</ADID>
                         <ADID>A2</ADID>
                     </action-object>
                 </action>

                  //notification for updating an ad metadata
                 <Action>
                     <Action-type>2</Action-type>
                     <action-object>
                         <ADID>A3</ADID>
                         <Ad-metadata>
                             <targeting>XXXXX</targeting>
                             <Impressiongs>XX</Impressions>
          <renew-time>XX</renew-times
          ......
                         </Ad-metadata>
                     </action-object>
                 </action>
                  //notification for reporting ad metrics
                 <Action>
                     <Action-type>3</Action-type>
                     <action-object>
                         <ADID>A4</ADID>
                     </action-object>
                 </action>
            </body>
          </notification>
```

FIG. 13 is a schematic structural diagram of an advertisement placing apparatus that is used to implement the method for placing an advertisement according to the first embodiment of the present invention. As shown in FIG. 13, the advertisement placing apparatus 1300 includes: an advertisement selecting module 1301, a validity judging module 1302, and a placing module 1303. Specifically, the advertisement placing apparatus 1310 may be an advertisement client or an application server. A working principle of the system is as follows:

The advertisement selecting module 1301 selects, according to a received advertisement placement request, advertisement information to be placed, which may specifically be as follows: Advertisement selection is performed in a local buffer; if the advertisement information is not found in the local buffer, an advertisement selection request may be sent to an advertisement server, so that the advertisement information selected by the advertisement server is received. The validity judging module 1302 judges validity of the advertisement information according to advertisement metadata that is generated by the advertisement server and associated with the advertisement information selected by the advertisement selecting module 1301. The placing module 1303 judges, according to the validity of the advertisement information, whether to place the advertisement information, where the validity of the advertisement information is judged by the validity judging module 1302.

Specifically, when the advertisement information is valid, the advertisement information is placed immediately; when the advertisement information is invalid at present, placement of the advertisement information is postponed; and, when the advertisement information is completely invalid, the advertisement information is deleted and is not placed. For details, see FIG. 2 and the relevant step descriptions. No further description is provided here.

By using the apparatus described in this embodiment, before the advertisement information is placed, the validity of the advertisement information is judged according to the advertisement metadata that is updated by the advertisement server and associated with the selected advertisement information. Therefore, a problem of asynchronization between locally buffered advertisement metadata and the advertisement metadata that registered by an advertiser on the advertisement server is solved, and thereby capping of the total exposure frequency on a terminal side and a network side is implemented in an accurate and controllable manner, so that an advertisement platform can avoid an invalid advertisement placement, a cost of the advertiser is reduced, and a return on an investment in the advertisement is improved.

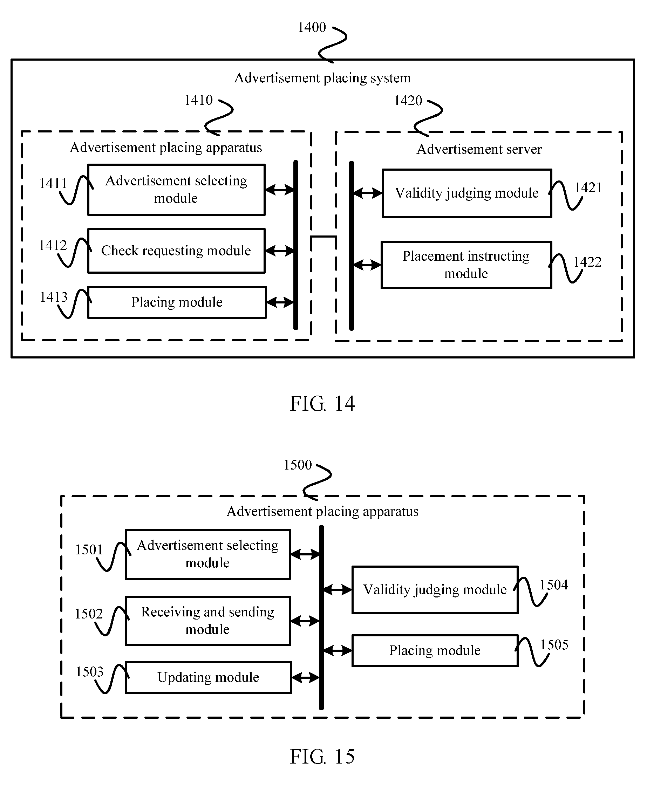

FIG. 14 is a schematic structural diagram of an advertisement placing system that is used to implement the method for placing an advertisement according to the second embodiment of the present invention. As shown in FIG. 14, the advertisement placing system 1400 includes an advertisement placing apparatus 1410 and an advertisement server 1420. In this embodiment, validity of the advertisement information is judged by the advertisement server 1420. Specifically, the advertisement placing apparatus 1410 may be an advertisement client or an application server. A working principle of the system is as follows:

An advertisement selecting module 1411 in the advertisement placing apparatus 1410 selects, according to a received advertisement placement request, advertisement information to be placed, which may specifically be as follows: Advertisement selection is performed in a local buffer; if the advertisement information is not found in the local buffer, an advertisement selection request may be sent to the advertisement server 1420, so that the advertisement information selected by the advertisement server 1420 is received; and a check requesting module 1412 sends a validity check request to the advertisement server 1420.

A validity judging module 1421 in the advertisement server 1420 judges the validity of the advertisement information according to updated advertisement metadata that is stored locally; and a placement instructing module 1422 sends an advertisement placement instruction message to the advertisement placing apparatus 1410 according to the validity of the advertisement information, where the validity is sent by the validity judging module 1421.

A placing module 1413 in the advertisement placing apparatus 1410 judges, according to the advertisement placement instruction message, whether to place the advertisement information, where the advertisement placing apparatus 1410 may specifically be the advertisement client or the application server.

By using the system described in this embodiment, a validity check request is sent to the advertisement server before the advertisement is placed. The advertisement server judges the validity of the advertisement information according to the updated advertisement metadata that is stored in the advertisement server. Therefore, a problem of update asynchronization between the advertisement metadata locally buffered on the application server and the advertisement client and the advertisement metadata stored on the advertisement server is solved, and thereby capping of the total exposure frequency is implemented in an accurate and controllable manner, so that a penalty (Penalty) caused by insufficient placements is reduced, an advertisement platform can avoid an invalid placed advertisement and an advertisement slot resource loss that is caused by excessive advertisement placements, harassment on the advertisement audience is prevented, futile advertisement expenses are reduced, a cost of an advertiser is reduced, and a return on an investment in the advertisement is improved.

FIG. 15 is a schematic structural diagram of an advertisement placing apparatus that is used to implement the method for placing an advertisement according to the third embodiment of the present invention. As shown in FIG. 15, the advertisement placing apparatus 1500 includes: an advertisement selecting module 1501, a receiving and sending module 1502, an updating module 1503, a validity judging module 1504, and a placing module 1505. A working principle of the advertisement placing apparatus 1500 is as follows:

The advertisement selecting module 1501 in the advertisement placing apparatus 1500 selects, according to a received advertisement placement request, advertisement information to be placed, which may specifically be as follows: Advertisement selection is performed in a local buffer; if the advertisement information is not found in the local buffer, an advertisement selection request may be sent to an advertisement server, so that advertisement information selected by the advertisement server is received; the receiving and sending module 1502 sends a metadata update request to the advertisement server, and receives updated advertisement metadata returned by the advertisement server; according to the updated advertisement metadata, the updating module 1503 updates locally buffered advertisement metadata that is associated with the selected advertisement information; the validity judging module 1504 judges validity of the advertisement information according to the updated advertisement metadata that is buffered locally; and the placing module 1505 judges, according to the validity of the advertisement information, whether to place the advertisement information, where the validity of the advertisement information is judged by the validity judging module 1504.

The apparatus described in this embodiment differs from the embodiment shown in FIG. 14 in that: The validity of the advertisement information is not judged by the advertisement server, but is judged by the application server and the advertisement client based on the updated advertisement metadata obtained from the advertisement server. In this way, an objective of accurately controlling capping of the total exposure frequency is fulfilled; in addition, a processing load of the advertisement server is relieved.

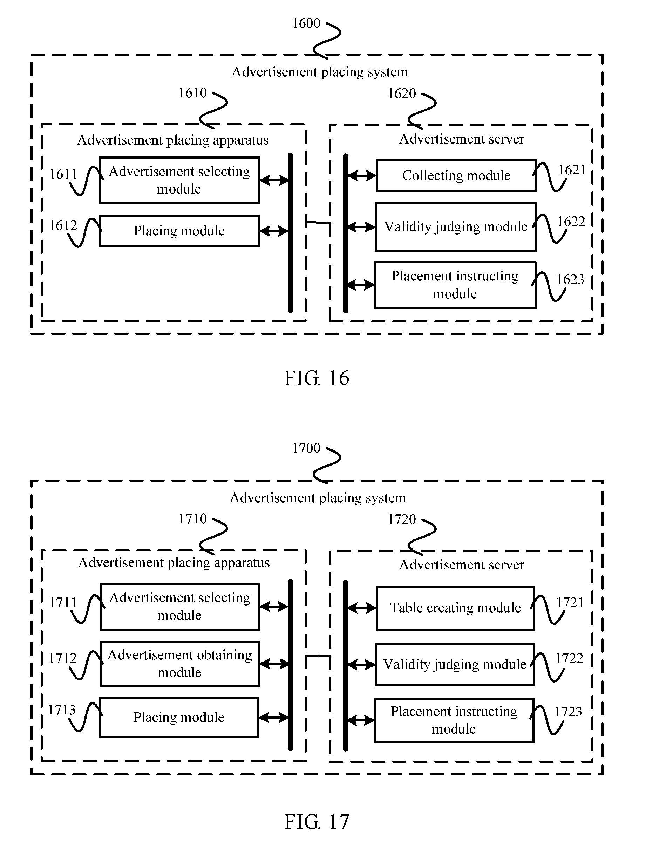

FIG. 16 is a schematic structural diagram of an advertisement placing system that is used to implement the method for placing an advertisement according to the fourth embodiment of the present invention. As shown in FIG. 16, the advertisement placing system 1600 includes an advertisement placing apparatus 1610 and an advertisement server 1620. In this embodiment, validity of advertisement information is judged by the advertisement server 1620. Specifically, the advertisement placing apparatus 1610 may be an advertisement client or an application server. A working principle of the system is as follows:

An advertisement selecting module 1611 in the advertisement placing apparatus 1610 selects, according to a received advertisement placement request, advertisement information to be placed, which may specifically be as follows: Advertisement selection is performed in a local buffer; if the advertisement information is not found in the local buffer, an advertisement selection request may be sent to the advertisement server 1620, so that advertisement information selected by the advertisement server 1620 is received.

A collecting module 1621 in the advertisement server 1620 collects placement metric data of advertisement information that is placed by the advertisement placing apparatus 1610; a validity judging module 1622 judges the validity of the advertisement information according to updated advertisement metadata that is stored in the advertisement server 1620 and the placement metric data that is collected by the collecting module 1621; and a placement instructing module 1623 sends an advertisement placement instruction message according to the validity of the advertisement information, where the validity is judged by the validity judging module 1622.

The placing module 1612 in the advertisement placing apparatus 1610 judges, according to the advertisement placement instruction message, whether to place the advertisement information.

By using the system described in this embodiment, the advertisement server actively collects the placement metric data of placed advertisement information, implements a validity check on the advertisement information according to the updated advertisement metadata that is stored in the advertisement server, and sends an advertisement placement instruction message to the advertisement client or the application server in an active push mode, which fulfills an objective of accurately controlling capping of the total exposure frequency.

FIG. 17 is a schematic structural diagram of an advertisement placing system that is used to implement the method for placing an advertisement according to the fifth embodiment of the present invention. As shown in FIG. 17, the advertisement placing system 1700 includes an advertisement placing apparatus 1710 and an advertisement server 1720. Specifically, the advertisement placing apparatus 1710 may be an advertisement client or an application server. A working principle of the system is as follows:

An advertisement selecting module 1711 in the advertisement placing apparatus 1710 selects, according to a received advertisement placement request, advertisement information to be placed, which may specifically be as follows: Advertisement selection is performed in a local buffer; if the advertisement information is not found in the local buffer, an advertisement selection request is sent to the advertisement server 1720 through an advertisement obtaining module 1712 and advertisement information selected by the advertisement server 1720 is received, where the advertisement selection request includes buffer instruction information that is used to indicate whether the advertisement information obtained from the advertisement server needs to be stored locally.

According to the buffer instruction information, a table creating module 1721 in the advertisement server 1720 creates a table of subscription mapping between the advertisement information that needs to be buffered locally and the advertisement placing apparatus 1710 that requests for selecting the advertisement information; according to updated advertisement metadata that is stored in the advertisement server 1720, a validity judging module 1722 judges validity of the advertisement information that is recorded in the table of subscription mapping; and according to the validity of the advertisement information, a placement instructing module 1723 sends an advertisement placement instruction message to the corresponding advertisement placing apparatus 1710 recorded in the table of subscription mapping, where the validity is judged by the validity judging module 1722.

A placing module 1713 in the advertisement placing apparatus 1710 judges, according to the advertisement placement instruction message, whether to place the advertisement information.

By using the system described in this embodiment, in an implicit subscription mode, the advertisement server creates a table of subscription mapping automatically for the advertisement information that needs to be buffered locally, and according to the updated advertisement metadata that is stored in the advertisement server, judges the validity of the advertisement information that is recorded in the table of subscription mapping, so as to fulfill an objective of accurately controlling the total number of exposures and capping of exposure frequency.

FIG. 18 is a schematic structural diagram of an advertisement placing system that is used to implement the method for placing an advertisement according to the sixth embodiment of the present invention. As shown in FIG. 18, the advertisement placing system 1800 includes an advertisement placing apparatus 1810 and an advertisement server 1820. Specifically, the advertisement placing apparatus 1810 may be an advertisement client or an application server. A working principle of the system is as follows:

An update subscribing module 1811 in the advertisement placing apparatus 1810 sends an advertisement update subscription request to the advertisement server 1820, where specifically, the advertisement update subscription request includes an advertisement list so as to subscribe to a message for updating the advertisement information listed in the advertisement list.

According to the advertisement update subscription request, a table creating module 1821 in the advertisement server 1820 creates a table of subscription mapping between subscribed advertisement information and an advertisement client or application server that requests for subscribing to the advertisement information; according to updated advertisement metadata that is stored in the advertisement server 1820, a validity judging module 1822 judges validity of the advertisement information that is recorded in the table of subscription mapping; and according to the validity of the advertisement informationjudge, a placement instructing module 1823 sends an advertisement placement instruction message to the advertisement client or the application server recorded in the table of subscription mapping, where the validity is judged by the validity judging module 1822.

A placing module 1812 in the advertisement placing apparatus 1810 judges, according to the advertisement placement instruction message, whether to place the advertisement information.

By using the system described in this embodiment, in an explicit subscription mode, the advertisement client or the application server actively subscribes to a message for updating advertisement information to be updated from the advertisement server; the advertisement server creates a table of subscription mapping, and according to the updated advertisement metadata that is stored in the advertisement server, judges the validity of the advertisement information that is recorded in the table of subscription mapping, so as to fulfill an objective of accurately controlling the total number of exposures and capping of exposure frequency.

For the specific processes for processing the validity check, the advertisement placement instruction message, and so on, in each of the apparatus embodiments and system embodiments of the present invention, see the description in a relevant part in each of the preceding method embodiments; and, for a process that is not mentioned in each of the apparatus embodiments or system embodiments but described in the method embodiments, see the description in a relevant part in each of the method embodiments.

Finally, it should be noted that the embodiments of the present invention are intended for describing the technical solutions of the present invention other than limiting the present invention. Although the present invention is described in detail with reference to the foregoing embodiments, persons of ordinary skill in the art should understand that they can still make modifications to the technical solutions described in the foregoing embodiments or make substitutions to some technical features thereof, without departing from the spirit and scope of the technical solutions of the embodiments of the present invention.

## Claims

1. A method for placing an advertisement, comprising:
after receiving an advertisement placement request, selecting, by an advertisement client or an application server according to the advertisement placement request, advertisement information to be placed;
judging validity of the advertisement information according to advertisement metadata that is generated by an advertisement server and associated with the selected advertisement information; and
judging, according to the validity of the advertisement information, whether to place the advertisement information.

2. The method for placing an advertisement according to claim 1, wherein the judging validity of the advertisement information comprises: judging whether the advertisement information fulfills any one of the following deletion conditions:
a validity period of the advertisement information has expired;
the total number of exposures of the advertisement information is reached;
a total budget of the advertisement information is reached; and
the advertisement information is cancelled.

3. The method for placing an advertisement according to claim 2, wherein the method further comprises: when it is judged that the advertisement information fulfills no deletion condition, judging whether the advertisement information fulfills any one of the following suspension conditions:
a daily budget of the advertisement information is reached; and
frequency capping of the advertisement information for an audience user is reached.

4. The method for placing an advertisement according to claim 3, wherein the judging, according to the validity of the advertisement information, whether to place the advertisement information comprises:
deleting the advertisement information when any deletion condition is fulfilled;
postponing placing the advertisement information when any suspension condition is fulfilled;
immediately placing the advertisement information when none of the deletion conditions and suspension conditions is fulfilled.

5. The method for placing an advertisement according to claim 1, wherein the selecting, according to the advertisement placement request, advertisement information to be placed comprises:
in a local buffer, selecting the advertisement information to be placed; or
when the advertisement information is not found in the local buffer, sending an advertisement selection request to the advertisement server, and receiving advertisement information selected by the advertisement server.

6. The method for placing an advertisement according to claim 1, wherein:
before judging validity of the advertisement information, the method further comprises: according to validity instruction information in the advertisement metadata, judging whether a validity check needs to be performed on the advertisement information.

7. The method for placing an advertisement according to any one of claims 1-6, wherein judging validity of the advertisement information according to advertisement metadata that is generated by the advertisement server and associated with the selected advertisement information comprises:
sending a validity check request to the advertisement server so that the advertisement server judges the validity of the advertisement information according to updated advertisement metadata that is stored by the advertisement server; and
receiving an advertisement placement instruction message that is sent, according to the judged validity of the advertisement information, by the advertisement server.

8. The method for placing an advertisement according to claim 7, wherein:
placing the advertisement information according to the validity of the advertisement information comprises: placing the advertisement information according to the advertisement placement instruction message.

9. The method for placing an advertisement according to any one of claims 1-6, wherein judging validity of the advertisement information according to advertisement metadata that is generated by the advertisement server and associated with the selected advertisement information comprises:
sending a metadata update request to the advertisement server;
according to the updated advertisement metadata from the advertisement server, updating advertisement metadata that is buffered locally and associated with the selected advertisement information; and
judging the validity of the advertisement information according to the updated advertisement metadata that is stored locally.

10. The method for placing an advertisement according to any one of claims 1-6, wherein judging validity of the advertisement information according to advertisement metadata that is generated by the advertisement server and associated with the selected advertisement information comprises:
collecting, by the advertisement server, placement metric data of placed advertisement information, wherein the placement metric data is reported by the advertisement client or the application server;
judging the validity of the advertisement information according to the placement metric data of placement and the updated advertisement metadata that is stored in the advertisement server, and sending an advertisement placement instruction message to the advertisement client or the application server according to the judged validity of the advertisement information.

11. The method for placing an advertisement according to claim 5, wherein the advertisement selection request comprises buffer instruction information, and the judging validity of the advertisement information according to the updated advertisement metadata associated with the selected advertisement information comprises:
according to the buffer instruction information, creating a table of subscription mapping between the advertisement information that needs to be buffered locally and the advertisement client or application server that requests for selecting the advertisement information;
according to the updated advertisement metadata that is stored in the advertisement server, judging the validity of the advertisement information that is recorded in the table of subscription mapping; and
according to the judged validity of the advertisement information, sending an advertisement placement instruction message to the corresponding advertisement client or application server recorded in the table of subscription mapping.

12. The method for placing an advertisement according to any one of claims 1-6, wherein judging the validity of the advertisement information according to advertisement metadata that is generated by the advertisement server and associated with the selected advertisement information comprises:
sending an advertisement update subscription request to the advertisement server so that the advertisement server creates, according to the advertisement update subscription request, a table of subscription mapping between subscribed advertisement information and the advertisement client or application server that requests for subscribing to the advertisement information, and the advertisement server judges, according to the updated advertisement metadata that is stored in the advertisement server, the validity of the advertisement information recorded in the table of subscription mapping; and
receiving an advertisement placement instruction message that is sent, according to the judged validity of the advertisement information, by the advertisement server to the corresponding advertisement client or application server recorded in the table of subscription mapping.

13. The method for placing an advertisement according to claim 2, further comprising:
delivering an advertisement deletion instruction to the advertisement client or the application server when the advertisement server judges that the advertisement fulfills a deletion condition.

14. The method for placing an advertisement according to claim 13, wherein the delivering an advertisement deletion instruction to the advertisement client or the application server comprises:
directly delivering the advertisement deletion instruction to the advertisement client or the application server in a notification mode; or
carrying the advertisement deletion instruction in a response message to the advertisement placement request, and delivering the response message to the advertisement client or the application server.

15. An advertisement placing apparatus, comprising:
an advertisement selecting module, configured to select, according to a received advertisement placement request, advertisement information to be placed;
a validity judging module, configured to judge validity of the advertisement information according to advertisement metadata that is generated by an advertisement server and associated with the advertisement information selected by the advertisement selecting module; and
a placing module, configured to judge, according to the validity of the advertisement information, whether to place the advertisement information, wherein the validity is judged by the validity judging module.

16. The advertisement placing apparatus according to claim 15, further comprising:
a receiving and sending module, configured to send a metadata update request to the advertisement server, and receive updated advertisement metadata returned by the advertisement server; and
an updating module, configured to update, according to the updated advertisement metadata, advertisement metadata that is buffered locally and associated with the selected advertisement information.

17. An advertisement placing system, comprising an advertisement placing apparatus and an advertisement server, wherein:
the advertisement placing apparatus comprises:
an advertisement selecting module, configured to select, according to a received advertisement placement request, advertisement information to be placed; and
a placing module, configured to judge, according to an advertisement placement instruction message from the advertisement server, whether to place the advertisement information; and
the advertisement server comprises:
a validity judging module, configured to judge validity of the advertisement information according to updated advertisement metadata that is stored locally; and
a placement instructing module, configured to send an advertisement placement instruction message to the advertisement placing apparatus according to the validity of the advertisement information, wherein the validity is sent by the validity judging module.

18. The advertisement placing system according to claim 17, wherein the advertisement placing apparatus further comprises:
a check requesting module, configured to send a validity check request to the advertisement server so that the validity judging module judges, after receiving the validity check request, the validity of the advertisement information according to the updated advertisement metadata that is stored in the advertisement server.

19. The advertisement placing system according to claim 17, wherein the advertisement server further comprises:
a collecting module, configured to collect placement metric data of the advertisement information that is placed by the advertisement placing apparatus; wherein
the validity judging module is further configured to judge the validity of the advertisement information according to the updated advertisement metadata that is stored in the advertisement server and the placement metric data that is collected by the collecting module.

20. The advertisement placing system according to claim 17, wherein the advertisement placing apparatus further comprises:
an advertisement obtaining module, configured to: when the advertisement selecting module fails to find the advertisement information in a local buffer, send an advertisement selection request to the advertisement server, and receive advertisement information selected by the advertisement server, wherein the advertisement selection request comprises buffer instruction information that is used to indicate whether the advertisement information obtained from the advertisement server needs to be stored locally;
the advertisement server further comprises:
a table creating module, configured to: according to the buffer instruction information, create a table of subscription mapping between the advertisement information that needs to be buffered locally and the advertisement placing apparatus that requests for selecting the advertisement information;
the validity judging module is further configured to judge, according to the updated advertisement metadata that is stored in the advertisement server, the validity of the advertisement information that is recorded in the table of subscription mapping.

21. An advertisement placing system, comprising an advertisement placing apparatus and an advertisement server, wherein:
the advertisement placing apparatus comprises:
an update subscribing module, configured to send an advertisement update subscription request to the advertisement server; and
a placing module, configured to judge, according to an advertisement placement instruction message from the advertisement server, whether to place advertisement information;
the advertisement server comprises:
a table creating module, configured to create, according to the advertisement update subscription request, a table of subscription mapping between subscribed advertisement information and an advertisement client or application server that requests for subscribing to the advertisement information;
a validity judging module, configured to judge, according to updated advertisement metadata that is stored in the advertisement server, validity of the advertisement information that is recorded in the table of subscription mapping; and
a placement instructing module, configured to send, according to the validity of the advertisement information, an advertisement placement instruction message to the advertisement client or the application server recorded in the table of subscription mapping, where the validity of the advertisement information is judged by the validity judging module.
